Europäisches Patentamt

European Patent Office

Office européen des brevets

(19)

(11) Veröffentlichungsnummer: **0 326 923 B1**

# EUROPÄISCHE PATENTSCHRIFT

(12)

(45) Veröffentlichungstag der Patentschrift :
21.08.91 Patentblatt 91/34

(51) Int. Cl.⁵ : **F16L 59/06**

(21) Anmeldenummer : 89101260.1

(22) Anmeldetag : 25.01.89

(54) Leitungsrohr zum Transport von tiefgekühlten Medien.

(30) Priorität : 03.02.88 DE 3803112

(43) Veröffentlichungstag der Anmeldung :
09.08.89 Patentblatt 89/32

(45) Bekanntmachung des Hinweises auf die
Patenterteilung :
21.08.91 Patentblatt 91/34

(84) Benannte Vertragsstaaten :
CH DE FR GB IT LI SE

(56) Entgegenhaltungen :
DE-A- 3 334 770
DE-A- 3 338 465

(56) Entgegenhaltungen :
GB-A- 895 553
US-A- 3 240 234
US-A- 3 810 491
US-A- 4 303 105
idem
CRYOGENICS, Band 18, Nr.12, Dezember
1978, Guilford, GB; H. LAEGER et al.:"Long
flexible transfer lines for gaseous and liquid
helium"* Seite 659, rechte Spalte; Figur 1*

(73) Patentinhaber : kabelmetal electro GmbH
Kabelkamp 20 Postfach 260
W-3000 Hannover 1 (DE)

(72) Erfinder : Schippl, Klaus, Dipl.-Ing.
Kleiststrasse 6
W-3004 Isernhagen 1 (DE)

EP 0 326 923 B1

## Beschreibung

Die Erfindung betrifft ein Leitungsrohr zum Transport von tiefkalten Medien, bestehend aus zwei konzentrisch und im Abstand zueinander angeordneten gewellten Metallrohren, wobei in dem Ringspalt zwischen den Metallrohren eine wendelartig gewickelte Superisolierungsschicht aus wechselweise übereinander angeordneten Lagen aus Isoliermaterial und reflektierenden Material z.B. Metallfolien oder metallisierte Kunststoffolien vorgesehen und der Ringspalt evakuiert ist.

Unter tiefkalten Medien im Sinne der Erfindung werden Medien mit einer Temperatur unter 100 K verstanden, z.B. verflüssigte Gase wie, Helium Sauerstoff, Stickstoff etc..

Für den Transport derartiger Medien ist aus der GB-PS 895553 ein Leitungsrohr wie eingangs erwähnt bekannt. Bei diesem Leitungsrohr dient die Superisolierungsschicht selbst als Abstandshalter für die konzentrischen Rohre. Diese Konstruktion birgt eine Reihe von Nachteilen in sich. So wird z.B. bei einer horizontalen Verlegung das Innenrohr auf der Superisolierung mit seinem Eigengewicht und dem Gewicht des im Innenrohr strömenden Mediums aufliegen. Da die Superisolierungsschicht, um einen höchstmöglichen Isolierungseffekt zu erzielen, locker gewickelt werden muß, wird die Superisolierungsschicht unterhalb des Innenrohres verdichtet und verliert dort ihre optimale Isolierwirkung. Dadurch verlagert sich das Innenrohr in seiner Lage zum Außenrohr, so daß ein verstärkter Wärmeeinfall in dem Bereich der verdichteten Superisolierungsschicht entsteht. Ein weiterer wesentlicher Nachteil ist, daß insbesondere bei größeren Leitungsrohrlängen ein Evakuieren der Superisolierungsschicht nicht oder nur mit großem Zeitaufwand möglich ist.

Bei einer anderen Ausführung eines Leitungsrohres (DE-A-1936641) liegt auf dem Innenrohr ein wendelförmig verlaufender Abstandshalter. Die Superisolierungsschicht ist über diesen Abstandshalter gewickelt und liegt in den zwischen zwei benachbarten Wendeln befindlichen Bereichen an dem Innenrohr an. Zwischen der nach außen weisenden Oberfläche des Abstandshalters und der inneren Oberfläche des Außenrohres ist die Superisolierungsschicht sehr stark verdichtet, so daß an diesen Stellen ein verstärkter Wärmeeinfall auftritt. Auch bei dieser Konstruktion ist es nicht möglich, größere Längen in wirtschaftlicher Weise zu evakuieren. Diesem Leitungsrohr haftet darüberhinaus der Nachteil an, daß die Abstandshalterwendel aus einem Streifen der Superisolierungsschicht besteht, deren einzelne Lagen in einem gesonderten Arbeitsgang miteinander verbunden werden müssen, z.B. durch Umwickeln mit einem Faden, Einwickeln in einer Folie oder durch Steppen. Dadurch wird diese Leitungsrohrkonstruktion sehr teuer. Beim Aufwickeln des mehrlagigen Abstandshalters treten Probleme auf, da sich die außen liegenden Lagen strecken, die inneren dagegen stauchen.

Aus Cryogenics, Band 18, Nr. 12, Dez. 1978 S. 655 bis 662 ist überdies noch bekannt, eine Abstandshalterwendel zwischen Wellrohr und Superisolierungsschicht vorzusehen. Es ist aber erkennbar, daß durch diesen Abstandshalter kein Ringspalt zwischen dem Wellrohr und der innersten Lage der Superisolierungsschicht geschaffen wird. Die Superisolierungsschicht liegt auf dem Wellrohr auf.

Der vorliegenden Erfindung liegt die Aufgabe zugrunde, ein Leitungsrohr anzugeben, daß auch bei Rohrlängen von mehr als 20 m schnell evakuiert werden kann und bei dem eine eventuell auftretende Verdichtung der Superisolierung infolge der Auflagekräfte des Innenrohres auf einen kleinstmöglichen Bereich beschränkt ist. Darüberhinaus soll bei annähernd gleichem Isolationswert teurer Superisolierungswerkstoff eingespart werden können.

Diese Aufgabe wird bei einem Leitungsrohr der eingangs genannten Art durch die Kombination folgender Merkmale gelöst :

(a)   die Wellentäler des inneren Metallrohres sind durch eine Folie überdeckt
(b)   zwischen der Folie und der innersten Lage der Superisolierungsschicht befindet sich ein sich über die gesamte Rohrlänge erstreckender Hohlraum, der durch einen wendelartig auf die Folie aufgewickelten Abstandshalter gebildet ist,
(c)   die Wickelrichtung der Superisolierungsschicht ist der Wickelrichtung des Abstandshalters entgegengesetzt.

Durch die Erfindung wird zwischen dem Innenrohr und der innersten Lage der Superisolierungsschicht ein sich über die gesamte Rohrlänge erstreckender Hohlraum geschaffen, der ein schnelles und vollständiges Evakuieren des Raumes zwischen dem inneren und äußeren Metallrohr ermöglicht. Durch das bessere Vakuum wird der Isolationswert des Ringraumes zwischen den Metallrohren erhöht. Das hat zur Folge, daß zur Erzielung eines gleichen Isolationswertes die Schichtdicke der Superisolierung reduziert werden kann. Dies führt weiterhin zu einem geringeren Durchmesser des Außenrohres und somit zu einer Materialersparnis beim Außenrohr. Aufgrund des verringerten Durchmessers des Außenrohres wird dessen Oberfläche verringert, so daß ein geringerer Wärmeeinfall auftritt.

Ein weiterer Vorteil des verringerten Durchmessers ist eine bessere Biegbarkeit des Leitungsrohres bei

2

gleichem Wellungsverhältnis. Die Folie, die vorteilhaft eine metallisierte Kunststoffolie ist, verbessert das Strahlungsverhalten der Oberfläche des Edelstahlinnenrohres.

Die Folie ist zweckmäßigerweise wendelartig aufgebracht und liegt auf den Wellenbergen auf. Die Breite der Folie ist dabei so bemessen, daß sie zumindest zwei benachbarte Wellenberge übergreift. Der Abstandshalter besteht mit besonderem Vorteil aus einzelnen miteinander verflochtenen Strängen. Diese Stränge, die zweckmäßigerweise einen runden Querschnitt haben, berühren sich untereinander und auch mit den angrenzenden Flächen der Folie sowie der Innenlage der Superisolierung nur punktförmig. Ein Wärmetranport aufgrund von Wärmeleitung ist damit auf ein Minimum reduziert.

Aus Gründen der Wärmeleitung und auch wegen der Flexibilität bestehen die Stränge aus Kunststoff. Für besondere Anwendungsfälle z.B. Transport von brennbaren Medien, muß jedoch ein nicht brennbares Material z.B. ein Geflecht aus keramischem Werkstoff oder Glasfasern verwendet werden.

Die Superisolierung, die zweckmäßigerweise jeweils zweilagig, d.h. eine metallisierte Folie und eine Isolierschicht, gewickelt wird, wird mit einander überlappenden Bandkanten gewickelt, wobei die Überlappung zwischen 10 und 75% liegt. Je größer die Überlappung ist, desto größer wird die Schichtdicke der Superisolierung. So ist es beispielsweise möglich, in einem Arbeitsgang bei einer Überlappung von 75% und sechs Wickeleinrichtungen 24 Lagen aus der oben genannten Superisolierung herstellen.

Nach einem weiteren Gedanken der Erfindung kann das Außenrohr bezüglich seiner lichten Weite, das ist der Innendurchmesser im Bereich der Wellentäler größer gewählt werden als der Außendurchmesser der Superisolierungsschicht. Bevorzugt wird eine Durchmesserdifferenz von 2 bis 20 mm, vorzugsweise 3 bis 7 mm. Dieser zusätzliche freie Querschnitt erleichtert noch das Evakuieren.

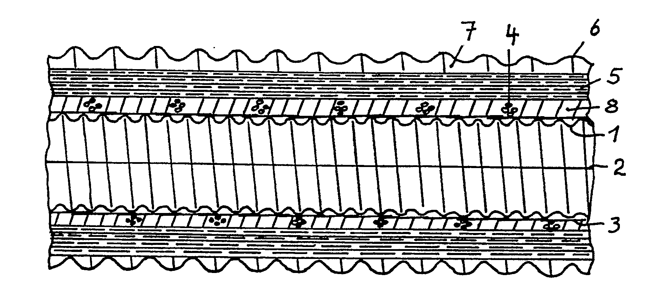

Die Erfindung ist an Hand des in der Figur schematisch dargestellten Ausführungsbeispiels näher erläutert.

Mit 1 ist ein schraubenlinienförmig gewelltes Metallrohr bezeichnet, welches durch kontinuierliches Formen eines Bandes aus Edelstahl zu einem Schlitzrohr, Verschweißen des Schlitzes und Wellen des Rohres hergestellt wurde. Die Schweißnaht ist mit 2 bezeichnet. Auf den Wellenbergen des gewellten Metallrohres 1 liegt eine Folie 3 z.B. aus Aluminium oder einem Kunststoff, dessen Oberfläche mit Aluminium beschichtet ist. Die Breite der Folie 3 ist so zu bemessen, daß sie zumindest auf zwei benachbarten Wellenbergen aufliegt. Die Folie 3 ist wendelartig auf das gewellte Metallrohr 1 aufgewickelt und zwar mit einer Überlappung der Bandkanten von zumindest 10%, bezogen auf die Breite der Folie 3. Über der Folie 3 ist ein Abstandshalter 4 wendelförmig aufgewickelt, welcher vorteilhafterweise aus mehreren zopfartig miteinander verflochtenen Strängen aus Kunststoff oder aus einem keramischen Material bzw. Glasfasern besteht. Der Querschnitt der Stränge ist kreisrund. Es ergibt sich somit eine punktförmige Berührung der einzelnen Stränge miteinander und ebenso eine punktförmige Berührung des Abstandshalters 4 zu der Folie 3 und zu der oberhalb gelegenen Superisolierungsschicht 5. Die Superisolierungsschicht besteht aus wechselweisen Lagen von Metallfolien oder metallbeschichteten Kunststoffolien und Folien aus einem Kunststoffvlies oder aus einem Vlies auf der Basis von Glasfasern oder keramischer Werkstoffe. Beim Aufwickeln der Superisolierungsschicht 5 werden zweckmäßigerweise je eine Metallfolie bzw. metallbeschichtete Kunststoffolie und eine Folie aus Kunststoffvlies oder Keramikvlies bzw. Glasfaservlies gemeinsam gewickelt. Beim wendelartigen Aufwickeln wird auch bei der Superisolierungsschicht so gewickelt, daß sich die Bandkanten überlappen. Als Mindestmaß für die Überlappung ist 10% bezogen auf die Breite der Folien der Superisolierungsschicht 5 anzunehmen. Ein höheres Maß für die Überlappung wird man wählen, wenn die Dicke der Superisolierungsschicht 5 größer angesetzt werden muß. Über der Superisolierungsschicht 5 ist ein gewelltes Metallrohr 6 angeordnet, welches wie das Innenrohr 1 durch Formen eines Edelstahlbandes zu einem Schlitzrohr, Verschweißen der Längskanten und anschließendes Wellen des Rohres hergestellt wird. Zwischen der Superisolierungsschicht 5 und dem Außenwellrohr 6 befindet sich ein Spalt 7.

Das dargestellte Leitungsrohr ist aufgrund des Herstellungsverfahrens in nahezu unbegrenzter Länge herstellbar und ist so flexibel, daß es wie ein elektrisches Kabel auf Kabeltrommeln oder in Ringbundform transportierbar und verlegbar ist. Je nach Außendurchmesser des Außenrohres 6 sind transportable Längen bis zu 200 m möglich.

Durch den Abstandshalter 4 befindet sich zwischen dem Innenrohr 1 und der Superisolierungsschicht 5 ein Ringspalt 8, der zusammen mit dem Spalt 7 sicherstellt, daß der Raum zwischen dem Innenrohr 1 und dem Außenrohr 6 schnell und vollständig evakuiert werden kann. Die Wickelrichtung der Lagen der Superisolierungsschicht 5 ist der Wickelrichtung des Abstandshalters 4 entgegengesetzt, wobei noch darauf zu achten ist, daß die Schlaglänge des Abstandshalters 4 so gewählt wird, daß die innere Lage der Superisolierungsschicht 5 zumindest auf zwei nebeneinandergelegenen Wendeln des Abstandshalters 4 aufliegt. Dadurch wird ein formstabiler Ringraum 8 erhalten.

Das Leitungsrohr gemäß der Lehre der Erfindung ist in hervorragender Weise für den Transport von tiefkalten Medien geeignet. In diesem Fall befindet sich der wärmestrahlungsintensive Bereich an der Außenseite des Rohrsystems. Hier herrschen im Vergleich zum Innenrohr 1 sehr viel höhere Temperaturen. Diese gehen

3

in der Berechnung der Strahlungsleistung mit der 4. Potenz ein. Da der Abstandshalter 4 an der Innenseite der Superisolierungsschicht 5 gelegen ist, nimmt er sehr wenig Strahlungsenergie auf.

Für vergleichende Messungen wurden zwei isolierte Leitungsrohre hergestellt und zwar ein Leitungsrohr nach dem Stand der Technik und ein Leitungsrohr nach der Lehre der Erfindung.

| | Stand der Technik | Erfindung |
|---|---|---|
| Innenrohrdurchmesser (außen) | 44 mm | 44 mm |
| Abstand Innenrohr zu Superisolierung | – | 3 mm |
| Dicke der Superisolierung | 8 mm | 3 mm |
| Außenrohrdurchmesser (innen) | 60 mm | 60 mm |
| Länge des Leitungsrohres | 50 m | 50 m |

Mittels einer Pumpe wurde über 7 Tage der Raum zwischen Innenrohr 1 und Außenrohr 6 evakuiert und anschließend nach der Abdampfmeßmethode die Verlustleistung des Leitungsrohres gemessen. Dabei ergab sich für das erfindungsgemäße Rohr eine um 50% niedrige Verlustleistung.

Die Erfindung beschränkt sich nicht auf das in der Figur dargestellte Ausführungsbeispiel. So kann es beispielsweise für den Transport von flüssigem Helium sinnvoll sein, eine koaxiale Anordnung von vier gewellten Leitungsrohren zu wählen.

## Patentansprüche

1. Leitungsrohr zum Transport von tiefkalten Medien, bestehend aus zwei konzentrisch und im Abstand zueinander angeordneten gewellten Metallrohren, wobei in dem Ringspalt zwischen den Metallrohren eine wendelartig gewickelte Superisolierungsschicht aus wechselweise übereinander angeordneten Lagen aus Isoliermaterial und reflektierendem Material z.B. Metallfolien oder metallisierte Kunststoffolien vorgesehen und der Ringspalt evakuiert ist, gekennzeichnet durch die Kombination folgender Merkmale

a) die Wellentäler des inneren Metallrohres (1) sind durch eine Folie (3) überdeckt

b) zwischen der Folie (3) und der innersten Lage der Superisolierungsschicht (5) befindet sich ein sich über die gesamte Rohrlänge erstreckender Hohlraum (8), der durch einen wendelartig auf die Folie aufgewickelten Abstandshalter (4) gebildet ist.

c) die Wickelrichtung der Superisolierungsschicht (5) ist der Wickelrichtung des Abstandshalters (4) entgegengesetzt.

2. Leitungsrohr nach Anspruch 1, dadurch gekennzeichnet, daß die Folie (3) wendelartig auf den Wellenbergen aufliegt.

3. Leitungsrohr nach Anspruch 1 oder 2, dadurch gekennzeichnet, daß die Folie (3) aus metallisiertem Kunststoff oder Metall besteht.

4. Leitungsrohr nach Anspruch 1 oder einem derfolgenden, dadurch gekennzeichnet, daß der Abstandshalter (4) aus einzelnen miteinander verflochtenen Strängen besteht.

5. Leitungsrohr nach Anspruch 4, dadurch gekennzeichnet, daß die Stränge aus Kunststoff bestehen.

6. Leitungsrohr nach Anspruch 1 oder einem der folgenden, dadurch gekennzeichnet, daß die Superisolierung (5) mit einer Überlappung gewickelt ist, wobei die Überlappung zwischen 10 und 75% liegt.

7. Leitungsrohr nach Anspruch 1 oder einem der folgenden, dadurch gekennzeichnet, daß der Außendurchmesser der Superisolierungsschicht (5) zwischen 2 und 20, vorzugsweise 3 und 7 mm kleiner ist als die lichte Weite des äußeren Wellrohres (6).

## Claims

1. Pipeline pipe for transporting very low-temperature media, comprising two corrugated metal pipes arranged concentrically and spaced apart, a spirally wound superinsulation layer, made of layers of insulation material and reflecting material, e.g. metal foils or metallised plastic films, arranged alternately above one another, being provided in the annular gap between the metal pipes, and the annular gap being evacuated, characterised by the combination of the following features :

a) the wave troughs of the inner metal pipe (1) are covered by a foil/film (3) ;

b) between the foil/film (3) and the innermost layer of the superinsulation layer (5) there is a cavity (8) extending over the entire length of the pipe, which cavity is formed by a spacer (4) coiled spirally onto the foil/film ;

c) the coiling direction of the superinsulation layer (5) is opposite to the coiling direction of the spacer (4).

2. Pipeline pipe according to Claim 1, characterised in that the foil/film (3) rests in spiral fashion on the wave crests.

3. Pipeline pipe according to Claim 1 or 2, characterised in that the foil/film (3) is composed of metallised plastic or metal.

4. Pipeline pipe according to Claim 1 or one of the following claims, characterised in that the spacer (4) is composed of individual interwoven strands.

5. Pipeline pipe according to Claim 4, characterised in that the strands are composed of plastic.

6. Pipeline pipe according to Claim 1 or one of the following claims, characterised in that the superinsulation (5) is coiled with an overlap, the overlap being between 10 and 75%.

7. Pipeline pipe according to Claim 1 or one of the following claims, characterised in that the outside diameter of the superinsulation layer (5) is between 2 and 20, preferably 3 and 7, mm smaller than the inside diameter of the outer corrugated pipe (6).

## Revendications

1. Tuyau d'une canalisation pour le transport de fluides cryogéniques constitué de deux tubes métalliques ondulés concentriques disposés avec un écartement l'un par rapport à l'autre, comprenant dans le jeu annulaire entre les tubes métalliques une couche superisolante bobinée en hélice en couches alternées disposées l'une sur l'autre de matériau isolant et de matériau réfléchissant, par exemple des films métalliques ou des films de matière plastique métallisés, et dans lequel on met sous vide le jeu annulaire, caractérisé par la combinaison des caractéristiques suivantes :

a) on recouvre les creux des ondulations du tube métallique interne (1) d'un film (3),

b) entre le film (3) et la couche la plus interne de la couche superisolante (5) se trouve une chambre vide (8) s'étendant sur toute la longueur du tuyau, qui est formée au moyen d'un écarteur en hélice (4) bobiné sur le film,

c) le sens d'enroulement de la couche de superisolation (5) est opposé au sens d'enroulement de l'écarteur (4).

2. Tuyau de canalisation selon la revendication 1, caractérisé en ce que le film (3) repose en hélice sur les sommets des ondulations.

3. Tuyau de canalisation selon la revendication 1 ou 2, caractérisé en ce que le film (3) est un film de métal ou de matière plastique métallisée.

4. Tuyau de canalisation selon la revendication 1 ou selon l'une des revendications suivantes, caractérisé en ce qu'on constitue l'écarteur (4) à partir de cordons individuels tressés les uns avec les autres.

5. Tuyau de canalisation selon la revendication 4, caractérisée en ce que les cordons sont en matière plastique.

6. Tuyau de canalisation selon la revendication 1 ou l'une des revendications suivantes, caractérisé en ce qu'on enroule la superisolation (5) avec recouvrement, le recouvrement étant compris entre 10 et 75%.

7. Tuyau de canalisation selon la revendication 1 ou l'une des revendications suivantes, caractérisé en ce que le diamètre extérieur de la couche superisolante (5) est plus inférieure de 2 à 20 mm, et de préférence de 3 à 7 mm, à la largeur libre du tube externe ondulé (6).